Europäisches Patentamt

European Patent Office

Office européen des brevets

(11) Publication number: **0 133 915**
**B1**

(12) EUROPEAN PATENT SPECIFICATION

(45) Date of publication of patent specification: **27.01.88**

(51) Int. Cl.⁴: **C 01 B 33/28, B 01 J 29/06**

(21) Application number: **84107665.6**

(22) Date of filing: **02.07.84**

(54) **Treatment process for removing fluoride impurities from zeolites.**

(30) Priority: **30.06.83 US 509604**

(43) Date of publication of application:
**13.03.85 Bulletin 85/11**

(45) Publication of the grant of the patent:
**27.01.88 Bulletin 88/04**

(84) Designated Contracting States:
**AT BE CH DE FR GB IT LI LU NL SE**

(56) References cited:
**EP-A-0 021 701**
**DE-A-2 828 458**
**US-A-3 594 331**
**US-A-3 733 391**
**US-A-3 933 983**
**US-A-4 093 560**
**US-A-4 297 335**

(73) Proprietor: **UNION CARBIDE CORPORATION**
**39 Old Ridgebury Road**
**Danbury Connecticut 06817 (US)**

(72) Inventor: **Hinchey, Richard John**
**107 Westchester Avenue**
**Thornwood New York 10594 (US)**
Inventor: **Caglione, Alexander Joel**
**5 Second Avenue**
**Nyack New York 10960 (US)**

(74) Representative: **Eggert, Hans-Gunther, Dr.**
**Räderscheidtstrasse 1**
**D-5000 Köln 41 (DE)**

Courier Press, Leamington Spa, England.

## Description

### Field of the invention

The instant process relates to a process for treating zeolitic aluminosilicates which contain insoluble fluorides.

### Background of the inventions

In recent years there has been substantial activity directed to the preparation of zeolitic aluminosilicates having higher $SiO_2$ to $Al_2O_3$ ratios than the previously known zeolitic aluminosilicates. Much of this activity has been in secondary treatment processes involving secondary treatment media. A review of some of the patent literature relating to this effort is instructive.

U.S. Patent 3,691,099 discloses a dealuminization process where an aqueous acidic media and a water soluble salt are employed to extract framework aluminum atoms from crystalline zeolitic aluminosilicates.

U.S. Patent 3,506,400 discloses a process similar to that of U.S. Patent No. 3,691,099 except a pretreatment step is employed and an aluminum-chelating agent is employed.

U.S. Patent 4,093,560 discloses a process for removing aluminum from a zeolite wherein a water-soluble acid is employed with an ammonium or alkali metal salt such that aluminum can be extracted from the zeolite by complexing. The mineral acid can be trifluoroacetic acid.

U.S. Patent No. 3,594,331 discloses a method for increasing the thermal stability of crystalline zeolites by treating the zeolite with a dilute solution of a fluorine compound. The treatment with a fluorine compound is a fluoride treatment (column 3, line 41 et. seq.). After the fluoride treatment has been completed the zeolite (fluoride treated) incorporates 2 to 15 grams of fluoride per 10,000 grams of zeolite. The patent notes that excess fluoride actually decreases the thermal stability of the zeolite.

U.S. Patent No. 3,933,983 discloses a fluoride treatment process similar to U.S. Patent No. 3,594,331 except that an ion exchange step is added (see claim 1).

The dissolution of aluminum sodium fluoride ($Na_3AlF_6$) in aqueous solution with $Al_2(SO_4)_3$, $Al(NO_3)_3$ and $AlCl_3$ has been reported by F. J. Frere, *J. Am. Chem. Soc.*, *58*, 1695—7 (1936) and by A. Seidell, "Solubilities of Inorganic and Metal Organic Compounds", Vol. I, 4th Ed. p. 184, (1958) D. Van Nostrand Co., Inc., Princeton, N.J.

The above processes are generally directed to only the extraction or removal of aluminum from a aluminosilicate zeolite. Furthermore it is possible to remove aluminum and insert $SiO_4$ tetrahedra in the framework of the aluminosilicate. This process inerts silicon atoms as $SiO_4$ tetrahedra by treating an aluminosilicate having a $SiO_2/Al_2O_3$ ratio of at least 3 with a fluoroaluminate salt in an amount of at least 0.0075 moles per 100 grams of the zeolitic aluminosilicate on an anhydrous basis, said fluorosilicate salt being in the form of an aqueous solution having a pH value within the range of 3 to about 7 and brought into contact with the zeolitic aluminosilicate at a rate sufficiently slow to preserve at least 60 percent of the crystallinity of the starting zeolitic aluminosilicate. The process relates to the preparation of numerous molecular sieves. Products prepared from zeolite Y are hereinafter designated as LZ-210. The final products are water washed but residual fluoride containing species generally requires exhaustive wash treatment with water, ammonium acetate and boiling water.

### Summary of the invention

The instant process relates to a process for treating fluoride-containing aluminosilicates comprising treating the fluoride-containing aluminosilicate with a solution of at least one soluble aluminum salt.

### Detailed description

It has been discovered that fluoride-containing aluminosilicates can be treated with water-soluble aluminum salts to remove insoluble fluoride compound(s) associated with the aluminosilicates. The removal of such fluoride compounds is important if the aluminosilicate is to be employed in many catalytic areas or if it is to be employed for an extended period of time, since the presence of such insoluble fluoride compounds in physical admixture with the aluminosilicate generally increases the rate of degradation of the aluminosilicates due to fluoride attack on the zeolite's lattice. Such fluorides have a tendency to cause fluxing of inorganic materials under thermal or hydrothermal conditions which may destroy the zeolites structure.

The term "fluoride" and/or "fluoride-containing" are used herein to refer to compounds which contain fluorine in a water insoluble form. Representative fluoro compounds include the various fluoroaluminate salts, e.g. alkali and alkaline earth salts of the form $M_3AlF_6$, $M_2AlF_5$, $MAlF_4$ where M is a cation, typically $NH_4^+$, alkali or alkaline earth metal cations. In addition, "fluoride" can mean $AlF_3$ and its hydrates. In general when the fluoride is an aluminum fluoride the ratio of F/Al is less than 3. The term "soluble aluminum compound" is used herein to refer to aluminum compounds which are soluble in water. Representative soluble aluminum salts include aluminum sulfate, nitrate, halide, eg., chloride, acetate and soluble organic salts and/or complexes, and mixtures thereof. The term "treating" is used according to its common meaning herein to mean the physical contacting of: 1) a solution or solid salt of the soluble aluminum compound; and 2) with the fluoride-containing aluminosilicate. The salt of aluminum employed herein may be provided in the form of an solution or added as a solid to a slurry of the fluoride-containing aluminosilicate.

The instant process comprises treating a fluoride-containing aluminosilicate with an effective amount of at least one soluble aluminum compound for an effective time and at an effective temperature such that the fluoride content of the aluminosilicate is decreased. The present process provides for a decrease in the amount of wash solutions, e.g., water, required for effecting removal of the fluoride, as compared with washing with only water, which results in substantial savings in time and in the cost of production of such fluoride-containing zeolites.

The soluble aluminum compound is provided in an effective amount in a solvent, preferably water, in which it is preferably soluble in a molar amount greater than the solubility of the insoluble fluoride to be removed. The solvent may be any solvent in which the aluminum salt is soluble to the extent above noted and is preferably water or an alkanol in admixture with water. Water is the preferred solvent and the soluble aluminum salt(s) will preferably be a soluble sulfate, acetate or halide and is preferably aluminum chloride.

The treating process of the instant invention is carried out at an effective temperature and for an effective period of time sufficient to decrease the amount of fluoride associated with the aluminosilicate but in all cases under the instant process this temperature and time and the amount of treating media (solvent and soluble aluminum compound) will be less than that employed when only the solvent is employed, i.e., when the solvent is employed in the absence of the soluble aluminum compound. Representative of effective treating temperatures are between about 20°C and below 95°C, preferably between about 20°C and about 75°C, it having been observed that at temperatures in excess of 95°C that the removal of fluorides is diminished as compared with temperatures less than 95°C. Representative of the effective time is from minutes and to several hours or more.

The concentration of the soluble aluminum salt in relation to the fluoride-containing aluminosilicate can vary depending on the fluoride concentration with the weight percent of soluble aluminum compound employable herein being from a few tenths of a weight percent up to a saturated solution. It has been found that if the concentration of the aluminum compound is correlated to the concentration of fluoride in the fluoride-containing aluminosilicate to provide a mole ratio of fluoride to aluminum cation of less than 3 that the removal of fluoride is markedly enhanced. Accordingly, such a correlation is preferred.

After the fluoride removal treatment with an effective amount of soluble aluminum salt has been carried out the amount of fluoride compound is less than amount originally contained in the aluminosilicate and such amount is achieved at a rate which is faster than obtained when only solvent, e.g. water, is employed and, further, is achieved by use of significantly smaller amounts of treating solution than when only the solvent, e.g. water, is employed.

Examples

To demonstrate the improved rate of removal of fluorides from fluoride-containing aluminosilicates a series of experiments were carried out on fluoride-containing aluminosilicates using aqueous solutions of soluble aluminum compounds and by using for comparison only a water wash process.

The following examples were carried out to illustrate the instant invention and are not intended to be limiting in any way thereof.

Examples 1—5

To demonstrate the improved removal of insoluble fluoride compounds from fluoride-containing aluminosilicates a preparation of LZ-210 was made by the following procedure. The original ammonium exchanged Y zeolite material (NH$_4$Y) had the following anhydrous composition expressed as weight percent: SiO$_2$, 64.6; Al$_2$O$_3$, 22.4; Na$_2$O, 1.92; (NH$_4$)$_2$O, 9.5.

In a stainless steel vessel, equipped with an agitator, 25.6 lbs (11.6 kg) of the hydrated NH$_4$Y zeolite [28.3 percent LOI (Loss on Ignition) (at 1000°C)] was slurried in 79 lbs (35.8 kg) of water. In a separate vessel 8.4 lbs (3.8 kg) of technical grade ammonium silicofluoride [99% (NH$_4$)$_2$SiF$_6$], was dissolved in 32 lbs (14.5 kg) of water. The zeolite slurry was heated to 75°C and the ammonium fluorosilicate solution was heated to 50°C. The fluorosilicate solution was then slowly and continuously added to the agitated zeolite slurry at the rate of approximately 100 grams of solution per minute over a period of about 3 hours. During this time the contents of both vessels were maintained at temperature by means of external electrical heating.

When the fluorosilicate addition was completed two (2) 1800 gram portions of the treated zeolite slurry were placed in separate 3 liter flasks equipped with stirrers. Two solutions of aluminum sulfate were then prepared by dissolving 345 gram samples of Al$_2$(SO$_4$)$_3$18H$_2$O in two 832 gram portions of water. These two solutions were then added to the two water slurries of LZ-210. One slurry was digested at 50°C while the second slurry was digested at 95°C. Weighed portions of each slurry were taken and analyzed after treatment times of 2 hours and 24 hours. Each portion of slurry weighed about 931 grams and gave approximately 100 grams of anhydrous LZ-210 product. The LZ-210 products were filtered and washed with 1000 grams of water. Analysis of the four products are shown in Table I. For comparison the analytical data on a similarly prepared LZ-210 sample prior to either water washing or treatment with a soluble aluminum salt is shown in Table I as Example 5.

It should be noted in Table I that digestion of the aluminosilicate product with a soluble aluminum salt (Al$_2$(SO$_4$)$_3$) at 95°C does not allow for the washing of the product substantially free of all fluoride-containing

3

# 0 133 915

compounds. It is believed, but has not been conclusively demonstrated, that the fluoride residue in the product is not a fluoroaluminate salt but is rather an exchanged aluminum fluoride cation species such as $AlF_2^+$ or $AlF^{2+}$. When the extra-zeolite F/Al mole ratio of the system is reduced below 3 substantial concentrations of such species should be present in the liquor. It is likely that such species do not exchange readily with zeolitic cations at the lower temperature but do undergo activated exchange at higher temperatures. It is therefore important in the practice of this invention to carry out the treatment with soluble aluminum salts at a temperature less than about 95°C and most preferably less than about 50°C. Still lower temperatures can, of course, be used but dissolution rates of insoluble fluoride salts would be expected to be slower at such lower temperatures.

It is generally observed that fluoro compounds result in zeolite crystal damage in LZ-210 zeolites as evidenced by loss of X-ray crystallinity, surface area and adsorption capacity and increased lattice vacancy formation as indicated by increased IR adsorbtion at 3710 $cm^{-1}$.

TABLE I

| | Example | | | | |
|---|---|---|---|---|---|
| | 1 | 2 | 3 | 4 | 5 |
| $Al_2(SO_4)_3$ treatment | — | — | — | — | none |
| Time, hrs | 2 | 24 | 2 | 24 | — |
| Temp °C | 50 | 50 | 95 | 95 | — |
| $H_2O$ wash: (weight/weight) | 10 | 10 | 10 | 10 | none |
| Chemical analysis, wt. %* | | | | | |
| $SiO_2$ | 81.5 | 81.9 | 77.3 | 75.1 | 63.9 |
| $Al_2O_3$ | 12.9 | 13.14 | 19.2 | 21.7 | 21.6 |
| $Na_2O$ | 0.33 | 0.45 | 0.41 | 0.3 | 2.636 |
| $(NH_4)_2O$ | 4.9 | 4.8 | 4.1 | 3.8 | 17.6 |
| $F^-$ | 0.32 | 0.24 | 5.7 | 7.8 | 26.65 |
| Molar $SiO_2/Al_2O_3$ | 10.7 | 10.6 | 6.8 | 5.9 | 5.0 |
| Adsorption capacity, wt.% | | | | | |
| Oxygen** | 31.8 | 31.7 | 29.1 | 27.4 | 22.1 |
| Water*** | 27.9 | 29.0 | 27.2 | 24.3 | 16.1 |
| DTA Peak, °C | 1110 | 1105 | — | 740 | — |
| X-ray crystallinity, % | 121 | 109 | 98 | 108 | — |
| Nitrogen surface area, $M^2/g$ | 841 | 850 | 420 | 730 | 353 |
| Unit cell size, $a_o$, | 24.49 | — | 24.48 | 24.4 | 24 |

*Anhydrous basis
**Measured at 100 mm Hg $(1.3 \cdot 10^4$ Pa), $-183°C$
***Measured at 4.6 mm Hg $(6.1 \cdot 10^2$ Pa) 25°C

Examples 5 to 10

To demonstrate the advantages derived by the use of soluble aluminum salts in the removal of residual fluoride or fluoride-containing compounds present in the zeolite product LZ-210 as a result of the use of aluminum fluorosilicate solutions in the preparation of LZ-210, Examples 1—4 were duplicated herein using the same equipment and procedures. Example 5 is a comparative example similarly prepared but was not treated with an aluminum compound. On an anhydrous basis the starting Y zeolite (ammonium form) had the following chemical composition: $SiO_2$, 65.0 percent; $Al_2O_3$, 22.2 percent; $(NH_4)_2O$, 9.6 percent; an $Na_2O$, 2.56 percent.

The LZ-210 employed in the examples was prepared by forming a slurry of the Y zeolite by mixing 25.1 lbs (11.4 kg) of the ammonium form ($NH_4Y$), having a 28.1 percent LOI at 1000°C, with 65 lbs (29.5 kg) of water. In a separate vessel a solution of 7.8 lbs (3.5 kg) $(NH_4)_2SiF_6$ was dissolved in 31.2 lbs (14.1 kg) of $H_2O$ and heated to 50°C. This slurry was heated to 75°C with agitation. To this slurry was added the ammonium fluorosilicate solution at a rate of 100 g solution per minute by means of a small adjustable laboratory pump. Total addition time for the fluorosilicate solution was about three (3) hours. At the end of the three (3) hour period the mixture was cooled to 50°C and homogeneous samples of about equal size of the LZ-210 slurry were taken from the bulk mixture and treated separately with solutions of the following compounds: fifteen wt. % aqueous solutions of $Al_2(SO_4)_3 \cdot 18H_2O$, $Al(NO_3)_3 \cdot 3H_2O$ and $AlCl_3 \cdot 6H_2O$; and $Al_2O_3 \cdot 3H_2O$

4

(crystalline gibbsite). In addition a sample (Example 5) was not treated with an aluminum compound for comparison purposes.

Each slurry sample, prior to washing with water or treatment with the solution of soluble aluminum compound, weighed about 645 grams (g) and contained about 100 g of LZ-210 product (anhydrous basis). The following weights of each aluminum compound were added to each slurry:

| Aluminum compound | Weight |
| --- | --- |
| $Al(NO_3)_3 \cdot 3H_2O$ | 141.4 g |
| $AlCl_3 \cdot 6H_2O$ | 91.0 g |
| $Al_2O_3 \cdot 3H_2O$ | 29.4 g |
| $Al_2(SO_4)_3 \cdot 18H_2O$ | 125.6 g in 304 g $H_2O$ |

Each slurry was then maintained at 50°C for two hours to permit equilibration. The solids were then filtered either on a Buchner funnel or a filter press and washed with water at a weight ratio of 10:1 (water to solids), dried and analyzed. As a control, one 645 g sample (Example 6) of the LZ-210 slurry was not treated but was filtered after preparation directly and washed with the same quantity of water employed for the other examples.

In Examples 7 to 10 the amount of the aluminum compound added were sufficient to give a F/Al (fluoride to aluminum) mole ratio of 2.2 based on all non-framework aluminum, i.e., aluminum that is not retained in the LZ-210 zeolite lattice. Thus, the total non-framework aluminum is taken as equal to the sum of the moles of $(NH_4)_3AlF_6$ (formed by the stoichiometric reaction of $(NH_4)_2SiF_6$ with aluminum extracted from the starting Y zeolite) and the aluminum compound added in the treating step.

The analytical data for Examples 6 to 10 are set forth in Table II. The data show that the LZ-210 samples which had been treated with the aluminum compounds gave a higher DTA Collapse temperature. This higher DTA temperature indicates that the treated samples were more thermally stable with collapse of the lattice occurring at a higher temperature.

As is readily apparent from the data set forth in Table II, the aqueous solution of aluminum salts, i.e., chloride, nitrate and sulfate, were more effective in the removal of residual F as compared with the same amount of water at comparable washing conditions. Use of a crystalline aluminum hydroxide, $Al_2O_3 \cdot 3H_2O$, was no more effective than washing with water over the commercially practical short treatment period employed. The DTA (Differential Thermal Analysis) exotherm for crystal collapse occurred at a much lower temperature for the water washed LZ-210 (772°C) than for LZ-210 samples washed with solutions of soluble aluminum salts showing the deleterious effect of the 3.6 weight percent of the residual fluoride on the thermal stability of the aluminosilicate LZ-210.

TABLE II[1]

| | | Example | | | |
|---|---|---|---|---|---|
| | 6 | 7 | 8 | 9 | 10 |
| $Si/Al_2$ | 10.1 | 10.8 | 10.7 | 10.8 | 4.4 |
| $SiO_2$ | 77.2 | 79.7 | 81.1 | 81.5 | 66.7 |
| $Al_2O_3$ | 13.0 | 12.5 | 12.9 | 12.8 | 25.9 |
| $(NH_4)_2O$ | 7.2 | 5.4 | 4.2 | 4.4 | 6.3 |
| $Na_2O$ | 0.8 | 0.4 | 0.3 | 0.3 | 0.6 |
| $F^-$ | 3.6 | 0.4 | 0.4 | 0.3 | 3.2 |
| $F/Al$[2] | 6 | 2.2 | 2.2 | 2.2 | 2.2 |
| Cation bal. | 1.19 | 0.9 | 0.68 | 0.70 | 0.51 |
| $O_2$ Capacity | 29.6 | 31.6 | 30.2 | 30.2 | 24.7 |
| Treat. temp. (°C)[3] | 2.0 | 2.0 | 2.0 | 2.0 | 2.0 |
| Treat. time (hr)[3] | 50 | 50 | 50 | 50 | 50 |
| Aluminum Cpd. | none | $Al_2(SO_4)$ | $Al(NO_3)_3$ | $AlCl_3$ | $Al_2O_3 \cdot 3H_2O$ |
| DTA (collapse) | 772 | 1127 | 1097 | 1101 | — |

[1]$SiO_2$, $Al_2O_3$, $(NH_4)_2O$, $Na_2O$ and $F^-$ are given on a weight percent (anhydrous) basis and the ratios of $Si/Al_2$ and $F/Al$ are given on a mole basis.
[2]Fluoride ($F^-$) to aluminum (Al) mole ratio.
[3]Time and temperature employed for wash step with water or with solution of aluminum compound.

**Claims**

1. The process for treating fluoride-containing aluminosilicates to decrease the amount of fluoride contained therein comprising treating said fluoride-containing aluminosilicate with an effective amount of a solution of a soluble aluminum compound at a temperature below 95°C and for an effective time whereby the amount of insoluble fluoride compounds associated with said aluminosilicate is decreased.

2. The process of claim 1 wherein the aluminosilicate being treated is prepared by inserting silicon atoms as $SiO_4$ tetrahedra into the crystal lattice of an aluminosilicate zeolite by contacting a crystalline zeolitic aluminosilicate having a $SiO_2/Al_2O_3$ molar ratio of at least 3 and pore diameters of at least 3 Angstroms (30 nm) with a fluorsilicate salt in an amount of at least 0.0075 moles per 100 grams of the zeolitic aluminosilicate on an anhydrous basis, said fluorsilicate salt being in the form of an aqueous solution having a pH value within the range of 3 to about 7 and brought into contact with the zeolitic aluminosilicate at a rate sufficiently slow to preserve at least 60 percent of the crystallinity of the starting zeolitic aluminosilicate.

3. The process of claim 2 wherein the effective temperature is between 20°C and 75°C.

4. The process of claim 1 wherein the fluoride is a fluoroaluminate.

5. The process of claim 1 wherein the soluble aluminum compound is at least one of aluminum sulfate, aluminum nitrate, aluminum chloride, aluminum acetate, organic salts and complexes, and mixtures thereof.

6. The process of claim 5 wherein the soluble aluminum compound is provided as a water solution.

7. The process of claim 1 wherein the mole ratio of fluoride to aluminum cation in the treatment is less than 3.

**Patentansprüche**

1. Verfahren zur Behandlung fluoridhaltiger Alumosilikate zur Senkung der in diesen enthaltenen Fluoridmenge, umfassend die Behandlung dieses fluoridhaltigen Alumosilikates mit einer wirksamen Menge einer Lösung einer löslichen Aluminiumverbindung bei einer Temperatur unterhalb von 95°C für eine effektive Zeitdauer, wodurch die Menge der unlöslichen Fluoridverbindungen, die mit diesem Alumosilikat verbunden sind, gesenkt wird.

2. Verfahren nach Anspruch 1, bei dem das behandelte Alumosilikat durch Einschluß von Siliciumatomen in Form von $SiO_4$-Tetraedern in das Kristallgitter eines Alumosilikat-Zeoliths hergestellt wird, durch in Kontakt bringen eines kristallinen zeolithischen Alumosilikats mit einem Molverhältnis $SiO_2/Al_2O_3$ von wenigstens 3 und Porendurchmessern von wenigstens 3 Angström (30 nm) mit einem Fluorsilikatsalz in einer Menge von wenigstens 0,0075 Mol pro 100 g des zeolithischen Alumosilikats auf wasserfreier Basis, wobei dieses Fluorsilikatsalz in Form einer wässrigen Lösung mit einem pH-Wert innerhalb des Bereichs von 3 bis 7 vorliegt und mit dem zeolithischen Alumosilikat mit einer Geschwindigkeit in Kontakt gebracht wird, die ausreichend langsam ist, daß wenigstens 60% der Kristallinität des anfänglichen zeolithischen Alumosilikats erhalten bleibt.

3. Verfahren nach Anspruch 2, bei dem die effektive Temperatur zwischen 20°C und 75°C liegt.

4. Verfahren nach Anspruch 1, bei dem das Fluorid ein Fluoraluminat ist.

5. Verfahren nach Anspruch 1, bei dem die lösliche Aluminiumverbindung wenigstens eine der Verbindungen Aluminiumsulfat, Aluminiumnitrat, Aluminiumchlorid, Aluminiumacetat, der organischen Salze und Komplexe und deren Mischungen ist.

6. Verfahren nach Anspruch 5, bei dem die lösliche Aluminiumverbindung in Form einer wässrigen Lösung zugeführt wird.

7. Verfahren nach Anspruch 1, bei dem das Molverhältnis von Fluorid zu Aluminiumkation bei der Behandlung geringer ist als 3.

**Revendications**

1. Procédé de traitement d'aluminosilicates contenant des fluorures destiné à un diminuer la teneur en fluorures, consistant à traiter ledit aluminosilicate contenant un fluorure avec une quantité efficace d'une solution d'un composé d'aluminium soluble à une température inférieure à 95°C et pendant une durée efficace, la quantité des fluorures insolubles associés aux aluminosilicates étant ainsi diminuée.

2. Procédé suivant la revendication 1, dans lequel l'aluminosilicate à traiter est préparé par insertion d'atomes de silicium sous forme de tétraèdres $SiO_4$ dans le réseau cristallin d'une zéolite du type aluminosilicate par mise en contact d'un aluminosilicate zéolitique cristallin ayant un rapport molaire $SiO_2/Al_2O_3$ d'au moins 3 et des diamètres des pores d'au moins 3 angströms (0,3 nm) avec un fluorosilicate en une quantité d'au moins 0,0075 mole pour 100 grammes de l'aluminosilicate zéolitique, sur base anhydre, ledit fluorosilicate étant sous la forme d'une solution aqueuse ayant un pH compris dans l'intervalle de 3 à environ 7 et étant mis en contact avec l'aluminosilicate zéolitique à une vitesse suffisamment lente pour préserver au moins 60 pour cent de la cristallinité de l'aluminosilicate zéolitique de départ.

3. Procédé suivant la revendication 2, dans lequel la température efficace est comprise entre 20°C et 75°C.

4. Procédé suivant la revendication 1, dans lequel le fluorure est un fluoroaluminate.

5. Procédé suivant la revendication 1, dans lequel le composé d'aluminium soluble est formé d'au moins un composé choisi entre le sulfate d'aluminium, le nitrate d'aluminium, le chlorure d'aluminium, l'acétate d'aluminium, des sels et complexes organiques d'aluminium et leurs mélanges.

6. Procédé suivant la revendication 5, dans lequel le composé d'aluminium soluble est fourni sous forme d'une solution aqueuse.

7. Procédé suivant la revendication 1, dans lequel le rapport molaire du fluorure au cation aluminium dans le traitement est inférieur à 3.